# EUROPÄISCHE PATENTSCHRIFT

(11) **EP 2 864 056 B1**
(45) Veröffentlichungstag und Bekanntmachung des Hinweises auf die Patenterteilung: **14.09.2016**
(21) Anmeldenummer: 13726469.3
(22) Anmeldetag: 23.05.2013
(51) Int. Cl.: B05B 5/16, B05B 7/14, B05B 12/14, B05B 15/12, B65G 53/26, B05B 15/00

(54) **VORRICHTUNG ZUM FÖRDERN VON BESCHICHTUNGSPULVER AUS EINEM PULVERBEHÄLTER**
DEVICE FOR CONVEYING COATING POWDER FROM A POWDER CONTAINER
DISPOSITIF POUR DÉBITER UNE POUDRE DE REVÊTEMENT CONTENUE DANS UN RÉSERVOIR DE POUDRE

(30) Priorität: 20.06.2012 DE 102012210439
(43) Veröffentlichungstag der Anmeldung: 29.04.2015
(73) Patentinhaber: Gema Switzerland GmbH, 9015 St. Gallen (CH)
(72) Erfinder: MICHAEL, Hanspeter, CH-9200 Gossau (CH)
(74) Vertreter: Trinks, Ole
(86) Internationale Anmeldenummer: PCT/EP2013/060665
(87) Internationale Veröffentlichungsnummer: WO 2013/189686

(56) Entgegenhaltungen:
- WO-A2-01/15813
- DE-A1- 4 405 640
- DE-A1- 19 517 229

## Beschreibung

Die Erfindung betrifft eine Vorrichtung zum Fördern von Beschichtungspulver aus einem Pulverbehälter. Insbesondere betrifft die Erfindung eine Vorrichtung zum Fördern von Pulver oder pulverförmigem Material, insbesondere Beschichtungspulver, wobei mit Hilfe einer Pulverpumpe über ein damit strömungsmäßig verbundenes oder verbindbares Pulverförderrohr aus einem Pulverbehälter Pulver ansaugbar ist.

Eine Fördervorrichtung gemäß dem Oberbegriff von Anspruch 1 ist aus der DE 44 05 640 A1 bekannt, eine ähnliche Vorrichtung offenbart die DE 196 17 229A1.

Die Pulverpumpe kann beispielsweise in Gestalt eines Injektors ausgeführt sein, welcher einen mit einer Fördergasleitung strömungsmäßig verbundenen oder verbindbaren Fördergasanschluss aufweist zum Zuführen von Fördergas, insbesondere Förderluft. Der Injektor weist vorzugsweise einen mit einer Dosiergasleitung verbundenen oder verbindbaren Dosiergasanschluss auf zum geregelten Zuführen von Dosiergas, insbesondere Dosierluft, wobei das Fördergas dem Inektor derart zugeführt wird, dass im Injektor ein Unterdruckbereich gebildet wird.

Die Erfindung betrifft ferner eine Pulverversorgungsvorrichtung für eine Pulverbeschichtungsanlage, wobei die Pulverversorgungsvorrichtung mindestens eine Pulverfördervorrichtung der vorstehend genannten Art sowie mindestens einen Pulverbehälter aufweist.

Schließlich betrifft die Erfindung noch ein Verfahren zum Reinigen einer Pulverfördervorrichtung der vorstehend genannten Art.

Pulverhersteller liefern Sprühbeschichtungspulver in Pulverbehältern an Sprühbeschichtungsfirmen, wobei es sich bei diesen Pulverbehältern häufig um Pulversäcke handelt. Bei den Sprühbeschichtungsfirmen wird dann das Beschichtungspulver mittels einer Sprühbeschichtungsanlage auf zu beschichtende Objekte gesprüht. Danach wird das Beschichtungspulver auf die beschichteten Objekte durch Hitze aufgeschmolzen.

Pulversäcke, in denen häufig das Sprühbeschichtungspulver an Sprühbeschichtungsfirmen geliefert wird, können eine übliche Sackform haben. Sie können auch aus einem Kunststoffschlauches gebildet sein, welcher unten und oben zugeschweißt ist und zum Entleeren von Beschichtungspulver oben aufgeschnitten wird.

Während ihnen in der Sprühbeschichtungsanlage Beschichtungspulver entnommen wird, bleiben die Pulversäcke häufig in einem formstabilen Karton, in welchem der betreffende Pulversack vom Pulverhersteller geliefert wurde.

Um das Beschichtungspulver aus dem Pulverbehälter einer Sprühvorrichtung zuführen zu können, kommen Pulverfördervorrichtungen zum Einsatz. Eine derartige Pulverfördervorrichtung weist in der Regel eine Pulverpumpe, wie beispielsweise ein Injektor, sowie ein mit dem saugseitigen Anschluss der Pulverpumpe verbundenes Pulverförderrohr auf, über welches das Beschichtungspulver aus dem Pulverbehälter der Sprühvorrichtung zum Sprühbeschichten von Objekten zugeführt wird.

Injektoren zur pneumatischen Förderung von Beschichtungspulver von einem Pulverbehälter zu einer Sprühvorrichtung sind dem Prinzip nach beispielsweise aus der Pulverbeschichtungstechnik allgemein bekannt. Sprühvorrichtungen, zu denen mit Hilfe von Injektoren pneumatisch Beschichtungspulver befördert wird, können die Form von manuell betätigbaren Pistolen oder von automatisch gesteuerten Sprühgeräten haben. Je nach dem gewünschten Sprühverfahren kann die Sprühvorrichtung verschieden ausgebildet sein, wie es die Druckschriften US 3,521,815 A, US 4,802,625 A oder US 4,788,933 A zeigen.

Aus den beiden zuletzt genannten Druckschriften sind Sprühvorrichtungen bekannt, welchen zusätzlich zum Pulver-Gas-Strom Reinigungsgas zugeführt werden kann, welches über Elektroden zum elektrostatischen Aufladen des Beschichtungspulvers strömt und dadurch diese Elektroden reinigt und von Verunreinigungen durch Pulverablagerungen freihält. Die Hochspannung für die Elektroden kann in bekannter Weise durch einen in der Sprühvorrichtung enthaltenen Hochspannungserzeuger oder durch einen externen Hochspannungserzeuger erzeugt werden. Die Hochspannung des Hochspannungserzeugers erzeugt zwischen den Elektroden und einem zu beschichtenden Objekt, welches geerdet ist, ein elektrostatisches Feld, entlang welchem die Partikel des Beschichtungspulvers von der Sprühvorrichtung zum Objekt fliegen.

Um einen konstanten Förderstrom des Pulver-Luft-Gemisches zu erreichen, muss die Luftgeschwindigkeit in den Fluidleitungen, also insbesondere in den Pulverförderschläuchen, vorzugsweise einen Wert zwischen 10 bis 15 m/s annehmen. Bei einer niedrigeren Luftgeschwindigkeit in der Fluidleitung wird die Pulverförderung ungleichmäßig; es entsteht eine Pulsation des Pulver-Luft-Gemisches, welches sich bis zum Pulveraustritt an der Sprühvorrichtung fortpflanzt. Bei höheren Luftgeschwindigkeiten wird das elektrostatische Auftragen des Beschichtungspulvers auf das zu beschichtende Objekt sehr stark beeinträchtigt, weil dann die Gefahr besteht, dass das schon auf dem Objekt abgeschiedene Pulver wieder weggeblasen wird.

Je nach den Erfordernissen des Beschichtungsvorganges wird die der Sprühvorrichtung zugeführte Pulvermenge erhöht oder erniedrigt. Ein Praxiswert für die pro Zeiteinheit zugeführte Pulvermenge ist 300 g/min. Wenn die pro Zeiteinheit zugeführte Pulvermenge reduziert werden muss, wird als erstes der Druck der zum Injektor zugeführten Förderluft reduziert. Damit wird auch die Durchflussgeschwindigkeit der Förderluft in den Fluidleitungen reduziert. Jedoch darf die Gesamtluftmenge weder zu niedrig werden noch einen Höchstwert überschreiten. Um diese Luftmengenreduktion auszugleichen, also um wieder mindestens auf 10 m/s Luftgeschwindigkeit zu gelangen, unter Beibehaltung des reduzierten Pulverausstoßes, wird dem Injektor mehr Dosierluft zugeführt. Die bekannte Funktion der Injektoren ist folgende:
Die Förderluft erzeugt im Injektor einen Unterdruck, durch welchen Beschichtungspulver aus einem Pulverbehälter angesaugt, von der Förderluft erfasst und durch Fluidleitungen der Sprühvorrichtung zugeführt wird. Durch Verändern des Druckes und damit auch der Menge der Förderluft kann die pro Zeiteinheit geförderte Menge an Beschichtungspulver eingestellt werden. Da die Förderleistung von der Größe des von der Förderluft erzeugten Unterdruckes im Injektor abhängig ist, kann bei konstanter oder variabler Förderluft die Förderluft auch dadurch geregelt werden, dass in den Unterdruckbereich des Injektors Dosierluft eingeleitet wird, um dadurch die Größe des Unterdruckes entsprechend der gewünschten Fördermenge von Pulver zu verändern. Dies bedeutet, dass die Pulverfördermenge nicht allein von der Förderluftmenge abhängig ist, sondern von der Differenz von Förderluft minus Dosierluft. Die Gesamtluftmenge, welche das Beschichtungspulver transportiert, muss jedoch aus den zuvor genannten Gründen für einen bestimmten Beschichtungsvorgang konstant bleiben.

Eine pneumatische Pulverfördervorrichtung der zuvor genannten Art, d.h. eine Vorrichtung, welche ein Pulverförderrohr und mindestens eine Pulverpumpe beispielsweise in Gestalt eines Injektors aufweist, eignet sich insbesondere für die Pulverversorgung einer zur elektrostatischen Sprühbeschichtung von Gegenständen mit Pulver eingesetzten Pulverbeschichtungsanlage, bei welcher sich frisches Beschichtungspulver (nachfolgend auch "Frischpulver" genannt) und ggf. zurückgewonnenes Beschichtungspulver (nachfolgend auch "Recovery-Pulver" genannt) in dem Pulverbehälter befinden und durch eine pneumatische Pulverfördervorrichtung der eingangs genannten Art einer Sprühvorrichtung zugeführt werden. Wie bereits angedeutet, kann die Sprühvorrichtung beispielsweise eine Handpistole oder eine automatische Pistole sein.

Eine Vorrichtung zum Fördern von Beschichtungspulver aus einem Pulverbehälter mit einem Pulverförderrohr mit einem Pulvereinlass, über welchen Beschichtungspulver aus einem Pulverbehälter dem Pulverförderrohr durch Ansaugung zuführbar ist, und eine Pulverförderrohrhalterung zum Halten des Pulverförderrohres, wobei das Pulverförderrohr wahlweise relativ zu der Pulverförderrohrhalterung in Längsrichtung des Pulverförderrohres verschiebbar ist, und wobei zum Zwecke der Reinigung des Pulverförderrohres der Pulvereinlass des Pulverförderrohres verschließbar ist und eine Druckluftleitung an das Pulverförderrohr anschließbar ist, wobei die Pulverförderrohrhalterung einen Führungsbereich mit einem zur Längsachse des Pulverförderrohres koaxial und konzentrisch angeordneten Durchgang aufweist, durch den sich zumindest bereichsweise das Pulverförderrohr erstreckt, ist aus der WO 01/15813 A2 bekannt.

Der Erfindung liegt die Problemstellung zugrunde, dass Pulverbeschichtungsanlagen und insbesondere die in Pulverbeschichtungsanlagen zum Einsatz kommenden Pulverfördervorrichtungen bei einem Pulverwechsel (Wechsel von einer Pulversorte auf eine andere Pulversorte), insbesondere bei einem Farbwechsel (Wechsel von Pulver einer ersten Farbe auf ein Pulver mit einer anderen Farbe) sorgfältig gereinigt werden müssen, da bereits einige wenige Pulverpartikel der früheren Pulversorte Beschichtungsfehler bei der Beschichtung mit der neuen Pulversorte zur Folge haben können.

Durch die Erfindung soll demgemäß die Aufgabe gelöst werden, eine Möglichkeit zu schaffen, durch welche ein Pulverwechsel auf einfach Weise schnell möglich ist.

Im Hinblick auf die Pulverfördervorrichtung wird diese Aufgabe erfindungsgemäß durch die Merkmale des unabhängigen Patentanspruches 1 gelöst.

Im Hinblick auf ein Verfahren zum wahlweise automatischen Reinigen einer Pulverfördervorrichtung, insbesondere bei einem Farb- oder Pulverwechsel, wird die der Erfindung zugrunde liegende Aufgabe durch den Gegenstand des nebengeordneten Patentanspruches 16 gelöst.

Demgemäß wird insbesondere eine Vorrichtung zum Fördern von Beschichtungspulver aus einem Pulverbehälter vorgeschlagen, wobei die Vorrichtung ein Pulverförderrohr und eine Pulverförderrohrhalterung zum Halten des Pulverförderrohres aufweist. Das Pulverförderrohr weist einen Pulvereinlass auf, über welchem Beschichtungspulver aus einem Pulverbehälter dem Pulverförderrohr insbesondere durch Ansaugung zuführbar ist. Das Pulverförderrohr ist von der Pulverförderrohrhalterung derart gehalten, dass das Pulverförderrohr vorzugsweise wahlweise relativ zu der Pulverförderrohrhalterung in Längsrichtung des Pulverförderrohres verschiebbar ist. Zum Zwecke einer Reinigung des Pulverförderrohres insbesondere bei einem Farb- oder Pulverwechsel ist der Pulvereinlass des Pulverförderrohres verschließbar und eine Druckluftleitung an das Pulverförderrohr anschließbar. Die Pulverförderrohrhalterung weist d einen Führungsbereich mit einem zur Längsachse des Pulverförderrohres axial und konzentrisch angeordneten Durchgang auf, wobei sich das Pulverförderrohr durch den Durchgang zumindest bereichsweise erstreckt. Es ist eine Schieber-/ Verschlussanordnung mit einem Schieber-/Verschlusselement vorgesehen, welches relativ zu der Pulverförderhalterung und relativ zu den sich zumindest bereichsweise durch den Durchgang der Pulverförderrohrhalterung erstreckenden Pulverförderrohr von einer ersten Position, in welcher das Schieber-/Verschlusselement eine Durchgangsöffnung des in dem Führungsbereich ausgebildeten Durchgangs zumindest teilweise abdeckt, in eine zweite Position verschiebbar ist, in welcher das Schieber-/Verschlusselement die Durchgangsöffnung des in dem Führungsbereich ausgebildeten Durchgangs derart freigibt, dass das Pulverförderrohr relativ zu dem Führungsbereich durch den Durchgang des Führungsbereiches in Längsrichtung des Pulverförderrohres verschiebbar ist. Ein Druckluftauslass der Druckluftleitung ist mit dem Schieber-/Verschlusselement derart verbunden, dass in der ersten Position des Schieber-/Verschlusselements der Druckluftauslass in die Durchgangsöffnung des in dem Führungsbereich ausgebildeten Durchgangs mündet.

Hierbei ist es von Vorteil, wenn der Durchgang des Führungsbereiches im Inneren des Führungsbereiches mit einem sich durch den Durchgang erstreckenden Bereich des Pulverförderrohres eine Ringkammer bildet, die den sich durch den Durchgang des Führungsbereiches erstreckenden Pulverförderrohrbereich zumindest teilweise umgibt.

Um zu erreichen, dass bei einem Pulverwechsel insbesondere auch die äußere Mantelfläche des Pulverförderrohres von ggf. daran anhaftenden Pulverresten gereinigt werden kann, ist in einer Weiterbildung der erfindungsgemäßen Lösung eine Abstreiferanordnung vorgesehen, welche derart mit dem sich zumindest teilweise durch den Durchgang des Führungsbereiches erstreckenden Pulverförderrohrbereich zusammenwirkt, dass bei einer Verschiebung des Pulverförderrohres relativ zu der Pulverförderrohrhalterung in Längsrichtung des Pulverförderrohres ggf. an der äußeren Mantelfläche des Pulverförderrohres anhaftende Pulverreste zumindest teilweise mechanisch von der äußeren Mantelfläche des Pulverförderrohres abgestreift werden können.

Zusätzlich oder alternativ zu der Abstreiferanordnung zum mechanischen Abstreifen von an der äußeren Mantelfläche des Pulverförderrohres ggf. anhaftenden Pulverresten ist es von Vorteil, wenn eine vorzugsweise wahlweise zuschaltbare Restpulverabsaugung vorgesehen ist, um bedarfsweise an der äußeren Mantelfläche des Pulverförderrohres ggf. anhaftende Pulverreste absaugen zu können. Dies gilt insbesondere dann, wenn das Pulverförderrohr relativ zu der Pulverförderrohrhalterung in Längsrichtung des Pulverförderrohres verschoben wird.

Die Restpulverabsaugung weist vorzugsweise ein mit einer Vakuumquelle oder dergleichen Absaugeinrichtung verbundenes oder verbindbares Absaugrohr auf, über welches bedarfweise zumindest ein Teil der an der äußeren Mantelfläche des Pulverförderrohres haftenden Pulverreste abgesaugt werden kann.

In einer bevorzugten Realisierung der erfindungsgemäßen Lösung ist vorgesehen, dass ein ansaugseitiger Endbereich des Absaugrohres der Restpulverabsaugung mit der den Pulverförderrohrbereich zumindest teilweise umgebenden Ringkammer in Fluidverbindung steht oder in Fluidverbindung bringbar ist.

Für ein wirkungsvolles Reinigen des Pulverförderrohres von Innen sowie einer am Pulverförderrohrauslass angeordneten Pulverpumpe, insbesondere Injektor, hat es sich herausgestellt, dass es von Vorteil ist, wenn das zum Reinigen bzw. Spülen in das Pulverförderrohr eingebrachte Gas in gepulster Weise eingebracht wird, da auf diese Weise ggf. an Innenwänden des Pulverförderrohres bzw. der Pulverpumpe oder an der Innenwand sonstiger mit dem Pulverförderrohr oder der Pulverpumpe verbundener Pulverleitungen anhaftende Pulverpartikel besonders effektiv gelöst werden können. Hierbei ist zu berücksichtigen, dass sich eine nicht ganz unerhebliche Grenzschicht ausbilden kann, wenn das System mit einem kontinuierlichen Spülgasstrom durchspült wird. Aufgrund dieser dann auftretenden Grenzschicht können häufig an Innenwandungen des Pulverförderrohres oder einer mit dem Pulverförderrohr verbundenen Pulverpumpe bzw. an der Innenwand einer ggf. mit der Pulverpumpe verbundenen Pulverleitung anhaftende Partikel nicht gelöst werden.

Um im Reinigungsbetrieb der Pulverfördervorrichtung das zum Reinigen bzw. Durchspülen vorgesehen Gas (Druckluft) in gepulster Weise in das System einbringen zu können, ist in einer vorteilhaften Realisierung der erfindungsgemäßen Lösung ein ansteuerbares Ventil, insbesondere ein ansteuerbares federbelastetes 2/2-Wegeventil vorgesehen, welches mit der an das Pulverförderrohr anschließbaren Druckluftleitung strömungsmäßig verbunden oder verbindbar ist, und welches über eine Steuereinrichtung derart ansteuerbar ist, dass insbesondere im Reinigungsbetrieb der Pulverfördervorrichtung das Spülgas in gepulster Weise zugeführt werden kann.

Die erfindungsgemäße Pulverfördervorrichtung eignet sich insbesondere für den Einsatz in einer Pulverversorgungsvorrichtung für eine Pulverbeschichtungsanlage, bei welcher zusätzlich zu der Pulverfördervorrichtung mindestens ein Pulverbehälter mit einer Pulverkammer für Beschichtungspulver vorgesehen ist, wobei die Pulveransaugung beispielsweise mit einem mit dem Pulverförderrohr verbundenen Injektor erfolgt, und wobei der ansaugseitige Endbereich des Pulverförderrohres in den Pulverbehälter hineinragt.

Die Erfindung betrifft nicht nur die zuvor beschriebene pneumatische Pulverfördervorrichtung, sondern auch ein Verfahren zum Reinigen einer solchen Pulverfördervorrichtung, insbesondere bei einem Farb- oder Pulverwechsel.

Im Folgenden werden unter Bezugnahme auf die beiliegenden Zeichnungen exemplarische Ausführungsformen der erfindungsgemäßen Lösung beschrieben.

In den Zeichnungen zeigen:
- Fig. 1: schematisch eine Pulverbeschichtungsanlage als Beispiel für eine von mehreren verschiedenen Arten von Pulverbeschichtungsanlagen, in welchen die Pulverfördervorrichtung nach der Erfindung vorteilhaft verwendbar ist;
- Fig. 2a: eine Seitenansicht auf das Pulverförderrohr einer exemplarische Ausführungsform der erfindungsgemäßen Pulverfördervorrichtung;
- Fig. 2b: eine perspektivische Ansicht auf einen am oberen Bereich des in Fig. 2a dargestellten Pulverförderrohres vorgesehenen Injektors zum Ansaugen von Beschichtungspulver durch das Pulverförderrohr;
- Fig. 3: eine perspektivische Ansicht eines Pulversprühbeschichtungswagens mit einer exemplarischen Ausführungsform der erfindungsgemäßen Pulverfördervorrichtung, bei welcher ein Pulverförderrohr gemäß Fig. 2a zum Einsatz kommt;
- Fig. 4: eine schematische Vertikalschnittansicht einer weiteren exemplarischen Ausführungsform der erfindungsgemäßen Pulverfördervorrichtung;
- Fig. 5: schematisch einen Ausschnitt, teilweise im Vertikalschnitt, eines Pulverförderrohres mit einem Injektor als Pulverpumpe am oberen Endbereich eines Pulverförderrohrs, welches für den Einsatz in einer Pulverfördervorrichtung gemäß der vorliegenden Erfindung geeignet ist; und
- Fig. 6a-c: schematische Vertikalschnittansichten einer Pulverförderohrhalterung gemäß einer Ausführungsform der erfindungsgemäßen Pulverfördervorrichtung in unterschiedlichen Zuständen zur Erläuterung der Reinigung der Pulverfördervorrichtung.

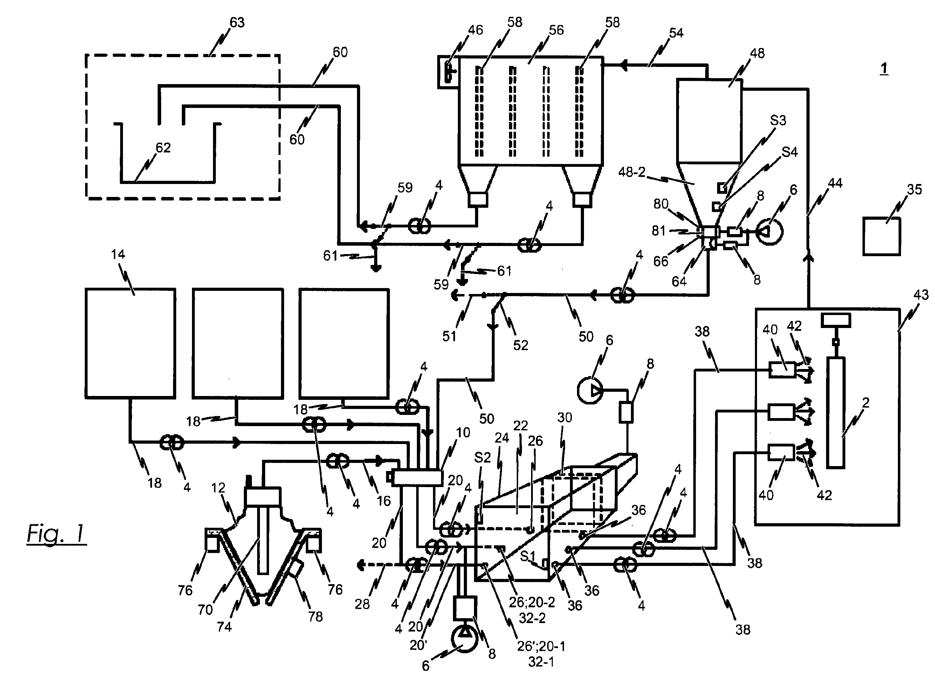

Fig. 1 zeigt schematisch eine exemplarische Ausführungsform einer Pulverbeschichtungsanlage 1 zum Sprühbeschichten von Gegenständen 2 mit Beschichtungspulver, welches danach in einem in Fig. 1 nicht dargestellten Wärmeofen auf die Gegenstände 2 aufgeschmolzen wird. Für die Steuerung der Funktion der Pulverbeschichtungsanlage 1 sind ein oder mehrere elektronische Steuergeräte 35 vorgesehen.

Zur pneumatischen Förderung des Beschichtungspulvers sind Pulverpumpen 4 vorgesehen. Dies können Injektoren sein, in welchen Beschichtungspulver mittels als Förderluft dienender Druckluft aus einem Pulverbehälter angesaugt wird, wonach dann das Gemisch aus Förderluft und Beschichtungspulver gemeinsam in einen Behälter oder zu einer Sprühvorrichtung strömt.

Geeignete Injektoren sind beispielsweise aus der Druckschrift EP 0 412 289 B1 bekannt.

Als Pulverpumpe 4 können auch solche Pumpenarten verwendet werden, welche kleine Pulverportionen mittels Druckluft nacheinander fördern, wobei jeweils eine kleine Pulverportion (Pulvermenge) in einer Pulverkammer gespeichert und dann mittels Druckluft aus der Pulverkammer herausgedrückt wird. Die Druckluft bleibt hinter der Pulverportion und schiebt die Pulverportion vor sich her. Diese Pumpenarten werden manchmal als Druckluftschubpumpen oder als Pfropfenförderungs-Pumpen bezeichnet, da die Druckluft die gespeicherte Pulverportion wie einen Pfropfen vor sich her durch eine Pumpenauslassleitung schiebt. Verschiedene Arten solcher Pulverpumpen zum Fördern von dichtem Beschichtungspulver sind beispielsweise aus folgenden Schriften bekannt: DE 103 53 968 A1, US 6,508,610 B2, US 2006/0193704 A1, DE 101 45 448 A1 oder WO 2005/051549 A1.

Zur Erzeugung der Druckluft für die pneumatische Förderung des Beschichtungspulvers und zur Fluidisierung des Beschichtungspulvers ist eine Druckluftquelle 6 vorgesehen, welche über entsprechende Druckeinstellelemente 8, zum Beispiel Druckregler und/oder Ventile, an die verschiedenen Geräte angeschlossen ist.

Frischpulver von einem Pulverlieferanten wird aus einem Lieferantenbehältnis, was beispielsweise ein Kleinbehältnis 12 zum Beispiel in Form eines formstabilen Behälters oder eines Sackes mit einer Pulvermenge von beispielsweise zwischen 10 bis 50 kg, zum Beispiel 35 kg, oder zum Beispiel ein Großbehältnis 14, beispielsweise ebenfalls ein formstabiler Behälter oder ein Sack, mit einer Pulvermenge zwischen beispielsweise 100 kg und 1.000 kg sein kann, mittels einer Pulverpumpe 4 in einer Frischpulverleitung 16 oder 18 einer Siebvorrichtung 10 zugeführt. Die Siebvorrichtung 10 kann mit einem Vibrator 11 versehen sein. In der folgenden Beschreibung bedeuten die Ausdrücke "Kleinbehälter" und "Großbehälter" jeweils sowohl "formstabiler Behälter" als auch "nicht-formstabiler, flexibler Sack", ausgenommen wenn ausdrücklich auf die eine oder die andere Behältnisart verwiesen wird.

Das von der Siebvorrichtung 10 gesiebte Beschichtungspulver wird durch Schwerkraft oder vorzugsweise jeweils durch eine Pulverpumpe 4 über eine oder mehrere Pulverzufuhrleitungen 20, 20' durch Pulvereinlassöffnungen 26, 26' in eine Pulverkammer 22 eines formstabilen Pulverbehälters 24 gefördert. Das Volumen der Pulverkammer 22 ist vorzugsweise wesentlich kleiner als das Volumen des Frischpulver-Kleinbehälters 12.

Gemäß einer denkbaren Realisierung der erfindungsgemäßen Lösung ist die Pulverpumpe 4 der mindestens einen Pulverzufuhrleitung 20, 20' zu dem Pulverbehälter 24 eine Druckluftschubpumpe. Hierbei kann der Anfangsabschnitt der Pulverzufuhrleitung 20 als Pumpenkammer dienen, in welche von der Siebvorrichtung 10 gesiebtes Beschichtungspulver durch ein Ventil, zum Beispiel ein Quetschventil, fällt. Nachdem diese Pumpenkammer eine bestimmte Pulverportion enthält, wird die Pulverzufuhrleitung 20 durch Schließen des Ventils von der Siebvorrichtung 10 strömungsmäßig getrennt. Danach wird die Pulverportion mittels Druckluft durch die Pulverzufuhrleitung 20, 20' in die Pulverkammer 22 gestoßen.

An ein oder vorzugsweise mehrere Pulverauslassöffnungen 36 des Pulverbehälters 24 sind Pulverpumpen 4, zum Beispiel Injektoren, zur Förderung von Beschichtungspulver durch Pulverleitungen 38 zu Sprühvorrichtungen 40 angeschlossen. Die Sprühvorrichtungen 40 können Sprühdüsen oder Rotationszerstäuber zum Sprühen des Beschichtungspulvers 42 auf den zu beschichtenden Gegenstand 2 aufweisen, welcher sich vorzugsweise in einer Beschichtungskabine 43 befindet.

Beschichtungspulver 42, welches nicht an dem zu beschichtenden Gegenstand 2 haftet, wird als Überschusspulver über eine Überschusspulverleitung 44 mittels eines Saugluftstromes eines Gebläses 46 in einen Zyklonabscheider 48 gesaugt. Das Überschusspulver wird im Zyklonabscheider 48 soweit wie möglich vom Saugluftstrom getrennt. Der getrennte Pulveranteil wird dann als Rückgewinnungspulver bzw. Recoverypulver vom Zyklonabscheider 48 über eine Pulverrückgewinnungsleitung 50 zu der Siebvorrichtung 10 geleitet, wo es durch die Siebvorrichtung 10 hindurch, entweder allein oder vermischt mit Frischpulver über die Pulverzufuhrleitungen 20, 20' wieder in die Pulverkammer 22 gelangt.

Je nach Pulversorte und/oder Pulververschmutzungsgrad kann auch die Möglichkeit vorgesehen werden, die Pulverrückgewinnungsleitung 50 von der Siebvorrichtung 10 zu trennen und das Rückgewinnungspulver (Recovery-Beschichtungspulver) in einen Abfallbehälter zu leiten, wie dies in Fig. 1 durch eine gestrichelte Linie 51 schematisch dargestellt ist. Die Pulverrückgewinnungsleitung 50 kann, damit sie nicht von der Siebvorrichtung 10 getrennt zu werden braucht, mit einer Weiche 52 versehen werden, an welche sie alternativ mit der Siebvorrichtung 10 oder mit einem Abfallbehälter verbindbar ist.

Der Pulverbehälter 24 kann einen oder mehrere, beispielsweise zwei Sensoren S1 und/oder S2 aufweisen, um die Zufuhr von Beschichtungspulver in die Pulverkammer 22 mittels des Steuergerätes 3 und der Pulverpumpen 4 in den Pulverzuleitungen 20, 20' zu steuern. Beispielsweise detektiert der untere Sensor S1 ein unteres Pulverniveaulimit und der obere Sensor S2 ein oberes Pulverniveaulimit.

Der untere Endabschnitt 48-2 des Zyklonabscheiders 48 kann als Vorratsbehälter für Rückgewinnungspulver ausgebildet und verwendet werden und hierfür mit einem oder mehreren, beispielsweise zwei Sensoren S3 und/oder S4 versehen werden, welche funktionsmäßig mit dem Steuergerät 3 verbunden sind. Dadurch kann beispielsweise automatisch die Frischpulverzufuhr durch die Frischpulverzuleitungen 16 und 18 gestoppt werden, solange im Zyklonabscheider 48 ausreichend Rückgewinnungspulver vorhanden ist, um der Pulverkammer 22 durch die Siebvorrichtung 10 hindurch Rückgewinnungspulver in ausreichender Menge zuzuführen, welche für den Sprühbeschichtungsbetrieb mittels der Sprühvorrichtungen 40 erforderlich ist. Wenn im Zyklonabscheider 48 hierfür nicht mehr ausreichend Rückgewinnungspulver vorhanden ist, kann automatisch auf die Zufuhr von Frischpulver durch die Frischpulverzuleitungen 16 oder 18 umgeschaltet werden. Ferner besteht auch die Möglichkeit, Frischpulver und Rückgewinnungspulver gleichzeitig der Siebvorrichtung 10 zuzuführen, so dass sie miteinander vermischt werden.

Die Abluft des Zyklonabscheiders 48 gelangt über eine Abluftleitung 54 in eine Nachfiltervorrichtung 56 und darin durch ein oder mehrere Filterelemente 58 zu dem Gebläse 46 und nach diesem in die Außenatmosphäre. Die Filterelemente 58 können Filtersäcke oder Filterpatronen oder Filterplatten oder ähnliche Filterelemente sein. Das mittels der Filterelemente 58 vom Luftstrom getrennte Beschichtungspulver ist normalerweise Abfallpulver und fällt durch Schwerkraft in einen Abfallbehälter oder kann, wie in Fig. 1 gezeigt, über eine oder mehrere Abfallleitungen 60, welche jeweils eine Pulverpumpe 4 enthalten, in einen Abfallbehälter 62 an einer Abfallstation 63 gefördert werden.

Je nach Pulverart und Pulverbeschichtungsbedingungen kann das Abfallpulver auch wieder zurückgewonnen werden zur Siebvorrichtung 10, um erneut in den Beschichtungskreislauf zu gelangen. Dies ist in Fig. 1 durch Weichen 59 und Zweigleitungen 61 der Abfallleitungen 60 schematisch dargestellt.

Beim Mehrfarbenbetrieb, bei welchem verschiedene Farben jeweils nur kurze Zeit versprüht werden, werden üblicherweise der Zyklonabscheider 48 und die Nachfiltervorrichtung 56 verwendet und das Abfallpulver der Nachfiltervorrichtung 56 gelangt in den Abfallbehälter 62. Der Pulverabscheide-Wirkungsgrad des Zyklonabscheiders 48 ist zwar meistens geringer als der der Nachfiltervorrichtung 56, jedoch kann er schneller gereinigt werden als die Nachfiltervorrichtung 56. Beim Einfarbenbetrieb, bei welchem für lange Zeit das gleiche Beschichtungspulver verwendet wird, ist es möglich, auf den Zyklonabscheider 48 zu verzichten und die Überschusspulverleitung 44 anstelle der Abluftleitung 54 an die Nachfiltervorrichtung 56 anzuschließen und die Abfallleitungen 60, welche in diesem Fall zurückzugewinnendes Beschichtungspulver enthalten, als Rückgewinnungspulverleitungen an die Siebvorrichtung 10 anzuschließen.

Beim Einfarbenbetrieb wird üblicherweise nur dann der Zyklonabscheider 48 in Kombination mit der Nachfiltervorrichtung 56 verwendet, wenn es sich um ein problematisches Beschichtungspulver handelt. In diesem Fall wird nur das Rückgewinnungspulver des Zyklonabscheiders 48 über die Pulverrückgewinnungsleitung 50 der Siebvorrichtung 10 zugeführt, während das Abfallpulver der Nachfiltervorrichtung 56 als Abfall in den Abfallbehälter 62 oder in einen anderen Abfallbehälter gelangt, welch letzter ohne Abfallleitungen 60 direkt unter einer Auslassöffnung der Nachfiltervorrichtung 56 gestellt werden kann.

Das untere Ende des Zyklonabscheiders 48 kann ein Auslassventil 64, beispielsweise ein Quetschventil aufweisen. Ferner kann oberhalb von diesem Auslassventil 64, im oder am unteren Ende des als Vorratsbehälter ausgebildeten unteren Endabschnittes 48-2 des Zyklonabscheiders 48 eine Fluidisiereinrichtung 66 zum Fluidisieren des Beschichtungspulvers vorgesehen sein. Die Fluidisiereinrichtung 66 enthält mindestens eine Fluidisierwand 80 aus einem offenporigen oder mit engen Bohrungen versehenen Material, welches für Druckluft, jedoch nicht für Beschichtungspulver durchlässig ist. Die Fluidisierwand 80 ist zwischen dem Pulverweg und einer Fluidisier-Druckluftkammer 81 angeordnet. Die Fluidisier-Druckluftkammer 81 ist über ein Druckeinstellelement 8 mit der Druckluftquelle 6 verbindbar.

Die Frischpulverleitung 16 und/oder 18 kann an ihrem stromaufwärtigen Ende, entweder direkt oder durch die Pulverpumpe 4, mit einem Pulverförderrohr 70 strömungsmäßig verbunden sein, welches in den Lieferantenbehälter 12 oder 14 eintauchbar ist zum Absaugen von frischem Beschichtungspulver. Die Pulverpumpe 4 kann am Anfang, am Ende oder dazwischen in der Frischpulverleitung 16 bzw. 18 oder am oberen oder unteren Ende des Pulverförderrohres 70 angeordnet werden.

Fig. 1 zeigt als Frischpulver-Kleinbehälter einen Frischpulver-Pulversack 12 in einem Sackaufnahmetrichter 74. Der Pulversack 12 wird von dem Sackaufnahmetrichter 74 in einer definierten Form gehalten, wobei die Sacköffnung sich am oberen Sackende befindet. Der Sackaufnahmetrichter 74 kann auf einer Waage oder Wägesensoren 76 angeordnet werden. Diese Waage oder die Wägesensoren 76 können, je nach Art, eine optische Anzeige und/oder ein elektrisches Signal erzeugen, welches nach Abzug des Gewichts des Sackaufnahmetrichters 74 dem Gewicht und damit auch der Menge des Beschichtungspulvers in dem Kleinbehälter 12 entspricht. Am Sackaufnahmetrichter 74 ist vorzugsweise mindestens ein in vibrierender Vibrator 78 angeordnet.

Es können zwei oder mehr Kleinbehälter 12 jeweils in einem Sackaufnahmetrichter 74 und/oder zwei oder mehr Großbehältnisse 14 vorgesehen werden, die alternativ benutzbar sind. Dadurch ist ein schneller Wechsel von einem auf einen anderen Kleinbehälter 12 oder Großbehältnis 14 möglich.

Obwohl in Fig. 1 nicht dargestellt, ist es grundsätzlich denkbar, dass die Siebvorrichtung 10 in dem Pulverbehälter 24 integriert ist. Ferner kann die Siebvorrichtung 10 weggelassen werden, wenn das Frischpulver eine ausreichend gute Qualität hat. In diesem Fall besteht ferner die Möglichkeit, zum Sieben des Rückgewinnungspulvers der Leitungen 44 und 55 ein separates Sieb zu verwenden, zum Beispiel stromaufwärts oder stromabwärts des Zyklonabscheiders 48 oder im Zyklonabscheider 48 selber. Auch das Rückgewinnungspulver benötigt dann kein Sieb, wenn seine Pulverqualität für eine Wiederverwendung ausreichend gut ist.

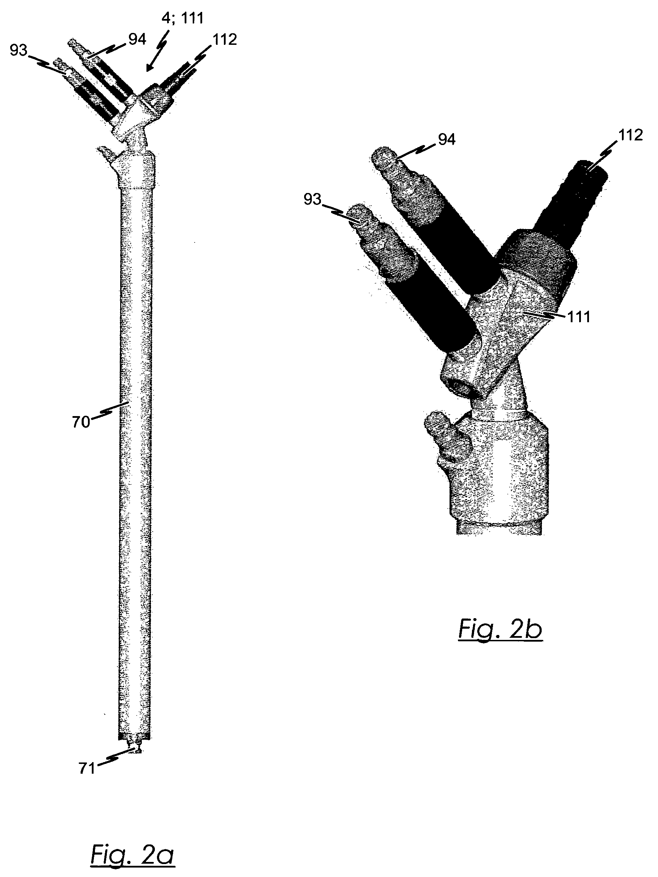

Nachfolgend werden unter Bezugnahme auf die Darstellungen in den Figuren 2 bis 6 verschiedene Aspekte der erfindungsgemäßen Pulverfördervorrichtung 110 beschrieben. Die Pulverfördervorrichtungen 110 gemäß der Erfindung eignen sich insbesondere als Bestandteil der zuvor unter Bezugnahme auf die Darstellung in Fig. 1 beschriebenen Pulverbeschichtungsanlage 1 und weisen ein Pulverförderrohr 70 mit einem Pulvereinlass 71 auf, über welchen Beschichtungspulver aus einem Pulverbehälter 12, 24 dem Pulverförderrohr 70 insbesondere durch Ansaugung zuführbar ist. Ferner ist eine Pulverförderrohrhalterung 72 zum Halten des Pulverförderrohres 70 vorgesehen, wobei das Pulverförderrohr 70 vorzugsweise wahlweise relativ zu der Pulverförderrohrhalterung 72 in Längsrichtung L des Pulverförderrohres 70 verschiebbar ist.

Im Einzelnen zeigt Fig. 2a eine Seitenansicht auf das Pulverförderrohr 70 einer exemplarische Ausführungsform der erfindungsgemäßen Pulverfördervorrichtung 110. Wie dargestellt, ist an einem Endbereich des Pulverförderrohres 70 - hier am oberen Endbereich des Pulverförderrohres 70 - eine Pulverpumpe 4 beispielsweise in Gestalt eines Injektors 111 vorgesehen, welcher einen mit einer Fördergasleitung strömungsmäßig verbundenen oder verbindbaren Fördergasanschluss 93 aufweist zum geregelten Zuführen von Fördergas, insbesondere Förderluft.

Fig. 2b zeigt eine perspektivische Ansicht auf den am oberen Bereich des in Fig. 2a dargestellten Pulverförderrohres 70 vorgesehenen Injektors 111 zum Ansaugen von Beschichtungspulver durch das Pulverförderrohr 70. Der Injektor 111 ist zusätzlich zu dem Fördergasanschluss 93 ferner mit einem Dosiergasanschluss 94 versehen, welcher mit einer Dosiergasleitung verbunden bzw. verbindbar ist, um den Injektor 111 in geregelter Weise Dosiergas, insbesondere Dosierdruckluft zuzuführen. Wie es aus dem Stand der Technik bekannt ist, wird das Fördergas dem Injektor 111 derart zugeführt, dass im Injektor 111 ein Unterdruckbereich gebildet wird.

Über den Fördergasanschluss 93 ist dem Injektor 111 Fördergas insbesondere Förderdruckluft zuführbar, so dass in einem Unterdruckbereich des Injektors 111 ein Unterdruck erzeugt wird. Dadurch wird Beschichtungspulver durch eine Pulveransaugöffnung (Pulvereinlass 71) und dem Pulverförderrohr 70 aus einem Pulverbehältnis heraus angesaugt und dann durch eine Strahlfangdüse 112 (Pulverausgang) durch einen Pulverschlauch zu einer Empfangsstelle gefördert, was die genannte Sprühvorrichtung 40 oder ein weiterer Pulverbehälter 24 sein kann. Der Injektor 111 kann zur Unterstützung der Pulverförderung mit einem Dosiergas- bzw. Zusatzgasanschluss 94 versehen sein zur Zufuhr von Dosiergas bzw. Zusatzgas (vorzugsweise Druckluft) in den Förderluft-Pulverstrom am Pulverausgang.

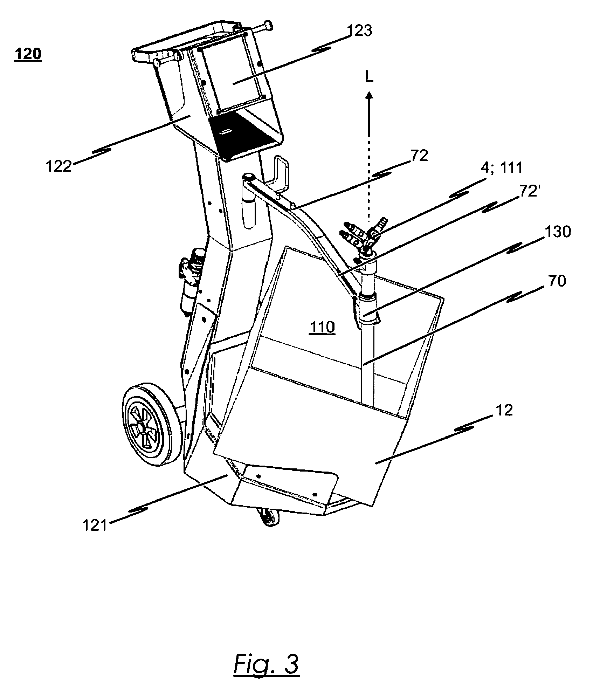

Fig. 3 zeigt in einer perspektivischen Ansicht einen Pulversprühbeschichtungswagen 120 mit einer exemplarischen Ausführungsform einer Pulverfördervorrichtung 110, welche ein Pulverförderrohr 70 gemäß Fig. 2a aufweist. Wie dargestellt, weist der Pulversprühbeschichtungswagen 120 einen Pulverbehälter-Unterbau 121 mit einer schrägen Standfläche auf seiner Oberseite auf. Auf der schrägen Standfläche ist ein Pulverbehälter 12 entsprechend schräg stellbar, so dass darin befindliches Beschichtungspulver zu einer Behälterwand oder in ein Behältereck abrutschen kann und dadurch mehr Pulverreste aus dem Pulverbehälter 12 absaugbar sind.

Bei dem Pulversprühbeschichtungswagen 120 gemäß Fig. 3 weist das Pulverförderrohr 70 der Pulverfördervorrichtung 110 an seinem oberen Ende einen Injektor 111 zur pneumatischen Pulverförderung auf. Das Pulverförderrohr 70 ist über eine Pulverförderrohrhalterung 72, die einen mit einem Grundgestell des Pulverbeschichtungswagens 120 verbundenen Armbereich 72' aufweist, befestigt.

Der Pulverbehälter-Unterbau 121 kann mit einem Vibrator versehen sein, durch welchen seine Standfläche zu Vibrationsbewegungen angeregt werden kann, durch welche das Abrutschen von Beschichtungspulver im Pulverbehälter 12 unterstützt wird.

Die exemplarische Ausführungsform des Pulverbeschichtungswagens 120 gemäß Fig. 3 weist ferner einen Steuergeräte-Aufnahmekörper 122 mit einem Aufnahmefach auf, in welchem ein elektronisches Steuergerät 123 zur Steuerung des Betriebes von mindestens einer Sprühpistole einsetzbar ist. Die Steuerung des Betriebes der Sprühpistole bedeutet insbesondere die Steuerung von mindestens einem Druckluftstrom zu einem Injektor 111, durch welchen aus dem Pulverbehälter 12 Beschichtungspulver absaugbar und in einem Druckluftstrom der Sprühpistole zuführbar ist. Die Steuerung des Betriebes der Sprühpistole kann auch der Steuerung der Zufuhr von Druckluft zur Sprühpistole und/oder der Steuerung von Hochspannung an der Sprühpistole dienen, wenn die Sprühpistole hierfür ausgebildet ist.

Das Pulverförderrohr 70 der bei dem Pulversprühbeschichtungswagen 120 gemäß Fig. 3 zum Einsatz kommenden Pulverfördervorrichtung 110 wird von der Pulverförderrohrhalterung 72 derart gehalten, dass das Pulverförderrohr 70 in Längsrichtung L des Pulverförderrohres 70 verschiebbar ist. Vorzugsweise ist das Pulverförderrohr 70 frei bewegbar durch die Pulverförderrohrhalterung 72 gelagert, so dass es durch seine Schwerkraft in den Pulverbehälter 12 eintauchen und dem Niveau des in dem Pulverbehälter 12 enthaltenen Beschichtungspulvers nach unten folgen kann. Es ist jedoch auch möglich, dass Pulverförderrohr 70 mit einer Höhenverstellvorrichtung, vorzugsweise eine automatisch steuerbaren Hubvorrichtung, mechanisch zu verbinden und durch diese Höhenverstellvorrichtung auf und ab zu bewegen.

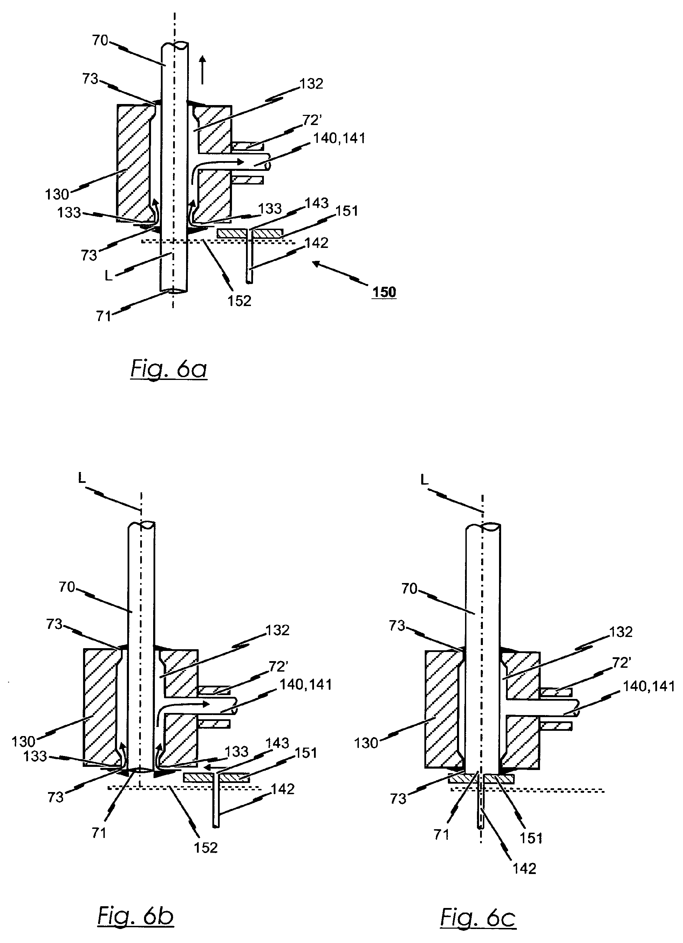

Wie es im Einzelnen den schematischen Schnittansichten gemäß Fig. 6a bis 6c entnommen werden kann, weist die Pulverförderrohrhalterung 72 einen Führungsbereich 130 mit einem zur Längsachse des Pulverförderrohres 70 koaxial und konzentrisch angeordneten Durchgang 131 auf, durch den sich zumindest bereichsweise das Pulverförderrohr 70 erstreckt. Im Einzelnen, und wie es insbesondere der Darstellung in Fig. 6a entnommen werden kann, ist der Durchgang 131 des Führungsbereiches 130 derart ausgebildet, dass er mit einem sich durch den Durchgang 131 erstreckenden Bereich des Pulverförderrohres 70 eine Ringkammer 132 im Inneren des Führungsbereiches 130 bildet, die den sich durch den Durchgang 131 des Führungsbereiches 130 erstreckenden Pulverförderrohrbereich zumindest teilweise umgibt.

Vorzugsweise ist eine Dichtungsanordnung 73 vorgesehen, die derart mit dem sich durch den Durchgang 131 des Führungsbereiches 130 erstreckenden Pulverförderrohr 70 zusammenwirkt, dass die Ringkammer 132 zumindest teilweise abgedichtet ist. Beispielsweise ist es denkbar, dass die Dichtungsanordnung 73 mindestens eine Ringdichtung aufweist, die gleichzeitig die Funktion einer Abstreiferanordnung übernimmt und an der äußeren Mantelfläche des Pulverförderrohres 70 haftende Pulverreste mechanisch abstreift, wenn das Pulverförderrohr 70 relativ zu der Pulverförderrohrhalterung 72 in Längsrichtung L des Pulverförderrohres 70 verschoben wird.

Die in den Zeichnungen exemplarisch dargestellten Pulverfördervorrichtungen 110 sind vorzugsweise ferner mit einer Restpulverabsaugung 140 versehen, welche wahlweise zuschaltbar ist, um bedarfsweise von an der äußeren Mantelfläche des Pulverförderrohres 70 haftende Pulverreste abzusaugen. Die Restpulverabsaugung 140 weist hierzu ein mit einer Vakuumquelle oder dergleichen Absaugeinrichtung verbundenes oder verbindbares Absaugrohr 141 auf, welches vorzugsweise in dem Armbereich 72' der Pulverförderrohrhalterung 72 integriert oder aufgenommen ist. Der ansaugseitige Endbereich des Absaugrohres 141 der Restpulverabsaugung 140 steht mit der den Pulverförderrohrbereich zumindest teilweise umgebenen Ringkammer 132 in Fluidverbindung.

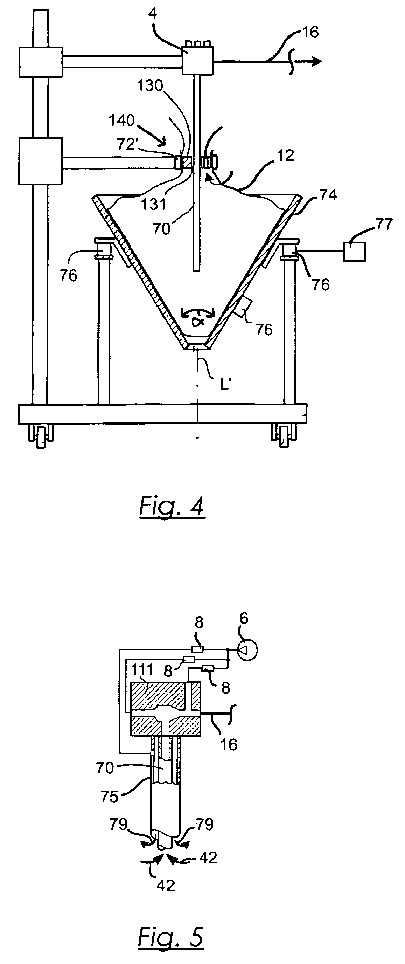

In Fig. 4 ist eine exemplarische Ausführungsform einer Entleervorrichtung dargestellt, welche mit einer Pulverfördervorrichtung 110 gemäß der vorliegenden Erfindung ausgerüstet ist, um Beschichtungspulver aus einem in einem Sackaufnahmetrichter 74 aufgenommenen Pulversack 12 zu fördern. Bei der dargestellten Ausführungsform ist der Sackaufnahmetrichter 74 zur Aufnahme des Pulversackes 12 unten enger als oben, so dass die Trichterwand den Pulversack 12 in einer stabilen Form und Position hält, bei welcher die Sacköffnung am oberen Sackende ist.

Der Trichterwinkel α an der Innenfläche des Sackaufnahmetrichters 74, vorzugsweise auch an der Trichteraußenfläche, beträgt vorzugsweise zwischen 45° und 90°, noch bevorzugter zwischen 50° und 70°, beispielsweise ungefähr 60°. Der Pulversack 12 kann aus einer Kunststofffolie bestehen, insbesondere einem Kunststoffschlauch, welcher mindestens am unteren Schlauchende, welches das untere Sackende bildet, zusammengeschweißt ist. Er kann aber auch am oberen Sackende zusammengeschweißt sein. Das obere Sackende muss dann zur Entnahme des Beschichtungspulvers aufgeschnitten werden. Der Trichterwinkel ist vorzugsweise derart gemessen, dass die Pulverpartikel bei abnehmender Pulvermenge im Pulversack 12 an der Sackwand durch Schwerkraft nach unten abrutschen können.

Die Trichtermittelachse L' des Sackaufnahmetrichters 74 ist vorzugsweise vertikal angeordnet. Gemäß anderen Ausführungsformen kann die Trichtermittelachse L' auch schräg angeordnet werden, solange die trichterförmige Trichterinnenfläche in allen Bereichen schräg nach oben zeigt.

Der Sackaufnahmetrichter 74 hat in den Ausführungsformen gemäß der Fig. 4 über seine gesamte Höhe entlang der Trichtermittellinie quer zu dieser Trichtermittellinie vorzugsweise einen kreisförmigen Querschnitt, obwohl selbstverständlich auch andere Querschnittsformen möglich sind, beispielsweise eine ovale Umfangsform oder eine eckige Umfangsform.

Gemäß einer vorteilhaften Ausführungsform ist der Sackaufnahmetrichter 74 mit mindestens einem Gewichtssensor 76 zum Messen des Gewichts des Sackaufnahmetrichters 74 einschließlich seines Inhalts, insbesondere der Pulvermenge, versehen. Der mindestens eine Gewichtssensor 76 kann derart ausgebildet sein, dass er das Gewicht optisch anzeigt und/oder derart ausgebildet sein, dass ein mit ihm funktionsmäßig verbundenes Signalgerät 77 ein Signal in Abhängigkeit von dem gemessen Gewicht erzeugt. Das Signal wird gemäß einer besonderen Ausführungsform jeweils dann erzeugt, wenn ein bestimmtes Mindestgewicht erreicht oder unterschritten wird. Es können auch in Abhängigkeit von zwei oder mehr verschiedenen Pulvergewichten Signal erzeugt werden, beispielsweise ein Signal zum Hinweis auf das baldige Erreichen des Mindestgewichtes und/oder auf das baldige Erriechen des Leerzustandes des Pulversackes 12.

Als Wägevorrichtung sind beispielsweise bei der Ausführungsform nach Fig. 4 drei Gewichtssensoren 76 vorgesehen, auf welchen der Sackaufnahmetrichter 74 an drei verschiedenen Umfangsstellen abgestützt ist. Denkbar wäre jedoch auch eine Waage, auf welcher der Sackaufnahmetrichter 74 steht, um den Sackaufnahmetrichter 74 zu wiegen.

Der Sackaufnahmetrichter 74 kann mit einem oder mehreren Vibratoren zum Vibrieren des Sackaufnahmetrichters 74 versehen sein, um Beschichtungspulver von der Sackwand abzuschütteln und um ein Nachrutschen von Beschichtungspulver im Pulversack 12 bei abnehmender Pulvermenge zu fördern. Bei der Ausführungsform gemäß Fig. 4 kommt zum Entleeren des in dem Sackaufnahmetrichter 74 aufgenommen Pulversackes 12 eine Pulverfördervorrichtung 110 zum Einsatz, die ein Pulverförderrohr 70 mit einer Pulverpumpe 4 am oberen Endbereich des Pulverförderrohres 70 aufweist.

Das Pulverförderrohr 70 wird über eine Pulverförderrohrhalterung 72 in Position zu gehalten, und zwar derart, dass das Pulverförderrohr 70 relativ zu dem Pulversack 12 in vertikaler Richtung bewegbar ist. Die Pulverförderrohrhalterung 72 weist einen Armbereich 72' auf, der mit einer (ortsfesten) Basis der Pulverförderrohrhalterung 72 entweder direkt oder über eine Höhenverstellvorrichtung, vorzugsweise eine automatisch steuerbare Hubvorrichtung, mechanisch verbunden ist, so dass der Armbereich 72' vertikaler Richtung auf und ab bewegt werden kann.

Wie auch bei der Pulverfördervorrichtung 110 gemäß Fig. 3 ist bei der Ausführungsform gemäß Fig. 4 das Pulverförderrohr 70 in einem Führungsbereich 130 der Pulverförderrohrhalterung 72 entsprechend gelagert. Im Einzelnen ist das Pulverförderrohr 70 mit seinem unteren Rohrende vorzugsweise in Richtung zum unteren Trichterende gerichtet und mit seinem unteren Rohrende nach unten bis zum unteren Trichterende oder bis in die Nähe des unteren Trichterendes bewegbar, damit auch aus dem untersten Ende des Pulversackes 12 Beschichtungspulver abgesaugt werden kann. Gemäß den Zeichnungen dargstellten bevorzugten Ausführungsformen ist das Pulverförderrohr 70 in der Trichter-Mittellinie in Längsrichtung L' der Trichter-Mittellinie angeordnet und auf und ab bewegbar.

Gemäß den bevorzugten Ausführungsformen der Erfindung ist am oberen Ende des Pulverförderrohres 70 eine Pulverpumpe 4 angeordnet. Die Pulverpumpe 4 kann jede beliebige bekannte Pumpenart sein.

Das Pulverförderrohr 70 kann ein einzelnes Pulverförderrohr 70 oder eine Vielzahl von Pulverrohren sein.

Fig. 5 zeigt eine bevorzugte Ausführungsform, bei welcher zwei Rohre ineinander mit radialem Abstand angeordnet, zu einer Doppelrohr-Einheit miteinander verbunden sind. Das Doppelrohr enthält innen das Pulverförderrohr 70 und radial außen ein Fluidisierungsluftrohr 75 zur Zufuhr von Fluidisier-Druckluft 79 von einer Druckluftquelle 6 über einen Druckluftregler 8 zum unteren Rohrende, wo die Fluidisierluft austritt und dort das Beschichtungspulver fluidisiert, d. h. in einen Schwebezustand bringt, damit es leichter durch das Pulverförderrohr 70 pneumatisch förderbar ist.

Die Pulverpumpe 4 für das Frischpulver aus dem Pulversack 12 kann in der Frischpulverleitung 16 oder gemäß der bevorzugten Ausführungsform am oberen Ende des Pulverförderrohres 70 angeordnet sein, wie dies beispielsweise in Fig. 5 am Beispiel eines Injektors 111 gezeigt ist. Dem Injektor 111 wird von der Druckluftquelle über einen Druckregler Förderdruckluft zugeführt, welche im Injektor 111 einen Unterdruck erzeugt, durch welchen Beschichtungspulver aus dem Pulversack 12 durch das Pulverförderrohr 70 hindurch gesaugt wird. Das vom Förderdruckluftstrom angesaugte Beschichtungspulver vermischt sich mit dem Förderdruckluftstrom und strömt zusammen mit diesem als Druckluft-Pulvergemisch durch die Frischpulverzuleitung 16. Zur Vermeidung von Pulverablagerungen in der Frischpulverzuleitung 16 kann zusätzlich Zusatzdruckluft der Druckluftquelle über einen weiteren Druckluftregler im Ende des Injektors 111 oder am Anfang der Frischpulverzuleitung 16 zugeführt werden.

Der Aufbau und die Funktionsweise der bei den Ausführungsformen gemäß Fig. 3 und Fig. 4 zum Einsatz kommenden Pulverförderrohrhalterung 72 wird nachfolgend unter Bezugnahme auf die Darstellungen in den Figuren 6a bis 6c beschrieben. Im Einzelnen ist in den Figuren 6a bis 6c eine exemplarische Ausführungsform einer Pulverförderrohrhalterung 72, mit welcher das Pulverförderrohr 70 der erfindungsgemäßen Pulverfördervorrichtung 110 gehalten wird, in einer vertikalen Schnittansicht gezeigt.

Demgemäß ist die exemplarische Ausführungsform der Pulverförderrohrhalterung 72 mit einem Führungsbereich 130 versehen, der über einen Armbereich 72' mit einer Basis der Pulverförderrohrhalterung 72 direkt verbunden ist, oder der über einen Armbereich 72' mit einer Basis der Pulverförderrohrhalterung 72 über eine zwischengeschaltete Höhenverstellvorrichtung verbunden ist. Im Führungsbereich 130 ist ein zur Längsachse des Pulverförderrohrs 70 koaxial und konzentrisch angeordneter Durchgang 131 vorgesehen. Durch diesen Durchgang 131 erstreckt sich zumindest bereichsweise das Pulverförderrohr 70. Der Durchgang 131 ist derart ausgebildet, dass er mit einem sich durch den Durchgang 131 erstreckenden Bereich des Pulverförderrohres 70 eine Ringkammer 132 im Inneren des Führungsbereiches 130 bildet. Diese Ringkammer 132 umgibt den sich durch den Durchgang 131 des Führungsbereiches 130 erstreckenden Pulverförderrohrbereich zumindest teilweise.

Gemäß den schematischen Ansichten in den Figuren 6a bis 6c ist ferner eine derart mit dem sich durch den Durchgang 131 des Führungsbereiches 130 erstreckenden Pulverförderrohr 70 zusammenwirkende Dichtungsanordnung 73 vorgesehen, dass die den sich durch den Durchgang 131 des Führungsbereiches 130 erstreckenden Pulverförderrohrbereich umgebende Ringkammer 132 zumindest teilsweise abgedichtet ist. Diese Dichtungsanordnung 73 übernimmt zusätzlich die Funktion einer Abstreiferanordnung, über welche an der äußeren Mantelfläche des Pulverförderrohres 70 haftende Pulverreste abgestreift werden, wenn das Pulverförderrohr 70 - wie in Fig. 6a mit dem vertikal verlaufenden Pfeil angedeutet - das Pulverförderrohr 70 relativ zu dem Führungsbereich 130 in Längsrichtung L des Pulverförderrohres 70 verschoben wird.

Bei der erfindungsgemäßen Lösung kommt ferner eine vorzugsweise wahlweise zuschaltbare Restpulverabsaugung 140 zum Einsatz, um bedarfsweise von der äußeren Mantelfläche des Pulverförderrohres 70 haftende Pulverreste absaugen zu können. Hierzu ist vorgesehen, dass die Restpulverabsaugung 140 ein mit einer Vakuumquelle oder dergleichen Absaugeinrichtung verbundenes oder verbindbares Absaugrohr 141 aufweist, das vorzugsweise in dem Armbereich 72' der Pulverförderrohrhalterung 72 integriert oder aufgenommen ist. Der ansaugseitige Endbereich des Absaugrohres 141 der Restpulverabsaugung 140 steht mit der den Pulverförderrohrbereich zumindest teilweise umgebenden Ringkammer 132 in Fluidverbindung oder ist mit dieser in Fluidverbindung bringbar.

Auf diese Weise ist sichergestellt, dass in einer leicht zu realisierenden aber dennoch effektiven Weise die äußere Mantelfläche des Pulverförderrohres 70 von ggf. daran anhaftenden Pulverresten gereinigt werden kann. Im Einzelnen ist hierzu lediglich erforderlich, dass Absaugrohr 141 der Restpulverabsaugung 140 mit der Vakuumquelle bzw. der Absaugeinrichtung zu verbinden und danach das Pulverförderrohr 70 relativ zu der Pulverförderrohrhalterung 72 in vertikaler Richtung nach oben zu verschieben. Dann wird das ggf. an der äußeren Mantelfläche des Pulverförderrohres 70 anhaftende Beschichtungspulver entweder mechanisch abgestreift oder durch die Restpulverabsaugung 140 abgesaugt.

Im Einzelnen, und wie es in den Figuren 6a und 6b schematisch angedeutet ist, wirkt die Dichtungsanordnung 73 mit der Außenmantelfläche des Pulverförderrohres 70 derart zusammen, dass zumindest ein Ansaugkanal 133 zwischen der Außenmantelfläche des Pulverförderrohres 70 und dem Führungsbereich 130 frei bleibt, so dass über diesen Ansaugkanal 133 Luft in die Ringkammer 132 strömen kann, wenn mit Hilfe der Restpulverabsaugung 140 aus der Ringkammer 132 ggf. an der Außenmantelfläche des Pulverförderrohres 70 anhaftende Pulverreste abgesaugt werden. In den Figuren 6a und 6b ist der durch die Ansaugkanäle 133 laufende Luftstrom mit Hilfe von Pfeilen schematisch angedeutet.

Um zusätzlich auch das Pulverförderrohr 70 von Innen zu reinigen sowie die mit dem Pulverförderrohr 70 verbundenen Komponenten, insbesondere die Pulverpumpe 4, ist erfindungsgemäß vorgesehen, dass der Pulvereinlass 71 des Pulverförderrohres 70 verschließbar und eine Druckluftleitung 142 an das Pulverförderrohr 70 anschließbar ist.

Bei einer bevorzugten Realisierung der erfindungsgemäßen Lösung und wie in den Figuren 6a bis 6c dargestellt, ist hierzu eine Schieberanordnung 150 vorgesehen, die ein Schieberelement 151 aufweist, welches relativ zu der Pulverförderrohrhalterung 72 und relativ zu dem sich zumindest bereichsweise durch den Durchgang 131 der Pulverförderrohrhalterung 72 erstreckenden Pulverförderrohr 70 verschiebbar ist. Im Einzelnen ist das Schieberelement 151 der Schieberanordnung 150 von einer ersten Position, in welcher das Schieberelement 151 eine Durchgangsöffnung 133 des in dem Führungsbereich 130 der Pulverförderrohrhalterung 72 ausgebildeten Durchgangs 131 zumindest teilweise abdeckt (vgl. Fig. 6c), in eine zweite Position verschiebbar, in welcher das Schieberelement 151 die Durchgangsöffnung 133 des in dem Führungsbereich 130 ausgebildeten Durchgangs 131 derart freigibt, dass das Pulverförderrohr 70 relativ zu dem Führungsbereich 130 durch den Durchgang 131 des Führungsbereiches 130 in Längsrichtung L des Pulverförderrohres 70 verschiebbar ist (vgl. Fig. 6a und Fig. 6b).

Vorzugsweise ist die Schieberanordnung 150 mit der Pulverförderrohrhalterung 72 verbunden. Denkbar sind aber auch andere Lösungen zum Befestigen der Schieberanordnung 150.

Wie in den Figuren 6a bis 6c angedeutet, ist es von Vorteil, wenn die Schieberanordnung 150 eine Führung 152 aufweist, um die Bewegung des Schieberelements 151 von seiner ersten Position in seine zweite Position und umgekehrt zu führen. Die Führung 152 kann beispielsweise durch Führungsschienen oder dergleichen erfolgen.

Mit dem Schieberelement 151 der Schieberanordnung 150 ist es somit möglich, im Reinigungsbetrieb und wenn das Pulverförderrohr 70 relativ zu der Pulverförderrohrhalterung 72 soweit in Längsrichtung L nach oben verschoben ist, dass der ansaugseitige Endbereich des Pulverförderrohres 70 auf der Höhe der Pulverförderrohrhalterung 72 liegt (vgl. Fig. 6b), den Pulvereinlass 71 des Pulverförderrohres 70 zu verschließen und eine Druckluftleitung 142 an das (verschlossene) Pulverförderrohr 70 anzuschließen.

Die Druckluftleitung 142 weist vorzugsweise einen Druckluftauslass 142 auf, der mit dem Schieberelement 151 derart verbunden ist, dass in der ersten Position des Schieberelements 151 der Druckluftauslass 142 in die Durchgangsöffnung 133 des in dem Führungsbereich 130 ausgebildeten Durchgangs 131 mündet. Auf diese Weise kann dem Inneren des Pulverförderrohres 70 Reinigungsdruckluft zugeführt werden, um das Rohrinnere sowie das Innere einer mit dem Pulverförderrohr 70 verbundenen Pulverpumpe 4 zu reinigen. Hierzu ist es insbesondere von Vorteil, wenn Druckluft in das ansaugseitige Ende des Pulverförderrohres 70 in gepulster Weise zugeführt wird.

Die Erfindung ist nicht auf die in den Zeichnungen exemplarisch dargestellten Ausführungsformen beschränkt, sondern ergibt sich aus einer Zusammenschau sämtlicher hierin offenbarter Merkmale.

Insbesondere ist es denkbar, dass anstelle einer Schieberanordnung 150 mit einem Schieberelement 151 zum bedarfsweisen Verschließen des Pulvereinlasses 71 des Pulverförderrohres 70 eine Verschlussanordnung mit einem beispielsweise klappbaren Verschlusselement zum Einsatz kommt.

## Patentansprüche

1. Vorrichtung (110) zum Fördern von Beschichtungspulver aus einem Pulverbehälter (12, 24), wobei die Vorrichtung (110) Folgendes aufweist:
- ein Pulverförderrohr (70) mit einem Pulvereinlass (71), über welchen Beschichtungspulver aus einem Pulverbehälter (12, 24) dem Pulverförderrohr (70) durch Ansaugung zuführbar ist; und
- eine Pulverförderrohrhalterung (72) zum Halten des Pulverförderrohres (70);
wobei das Pulverförderrohr (70) wahlweise relativ zu der Pulverförderrohrhalterung (72) in Längsrichtung (L) des Pulverförderrohres (70) verschiebbar ist, und wobei zum Zwecke der Reinigung des Pulverförderrohres (70) der Pulvereinlass (71) des Pulverförderrohres (70) verschließbar und eine Druckluftleitung (142) an das Pulverförderrohr (70) anschließbar ist, wobei die Pulverförderrohrhalterung (72) einen Führungsbereich (130) mit einem zur Längsachse des Pulverförderrohres (70) koaxial und konzentrisch angeordneten Durchgang (131) aufweist, durch den sich zumindest bereichsweise das Pulverförderrohr (70) erstreckt,
**dadurch gekennzeichnet,**
**dass** eine Schieber-/Verschlussanordnung (150) mit einem Schieber-/ Verschlusselement (151) vorgesehen ist, welches relativ zu der Pulverförderrohrhalterung (72) und relativ zu dem sich zumindest bereichsweise durch den Durchgang (131) der Pulverförderrohrhalterung (72) erstrecken den Pulverförderrohr (70) von einer ersten Position, in welcher das Schieber-/Verschlusselement (151) eine Durchgangsöffnung (133) des in dem Führungsbereich (130) ausgebildeten Durchgangs (131) zumindest teilweise abdeckt, in eine zweite Position verschiebbar ist, in welcher das Schieber-/Verschlusselement (151) die Durchgangsöffnung (133) des in dem Führungsbereich (130) ausgebildeten Durchgangs (131) derart freigibt, dass das Pulverförderrohr (70) relativ zu dem Führungsbereich (130) durch den Durchgang (131) des Führungsbereiches (130) in Längsrichtung (L) des Pulverförderrohres (70) verschiebbar ist, und
**dass** ein Druckluftauslass (143) der Druckluftleitung (142) mit dem Schieber-/Verschlusselement (151) derart verbunden ist, dass in der ersten Position des Schieber-/Verschlusselements (151) der Druckluftauslass (143) in die Durchgangsöffnung (133) des in dem Führungsbereich (130) ausgebildeten Durchgangs (131) mündet.

2. Vorrichtung (110) nach Anspruch 1,
wobei der Durchgang (131) des Führungsbereiches (130) derart ausgebildet ist, dass der Durchgang (131) des Führungsbereiches (130) mit einem sich durch den Durchgang (131) erstreckenden Bereich des Pulverförderrohres (70) eine Ringkammer (132) im Inneren des Führungsbereiches (130) bildet, die den sich durch den Durchgang (131) des Führungsbereiches (130) erstreckenden Pulverförderrohrbereich zumindest teilweise umgibt.

3. Vorrichtung (110) nach Anspruch 2,
wobei eine derart mit dem sich zumindest teilweise durch den Durchgang (131) des Führungsbereiches (130) erstreckenden Pulverförderrohr (70) zusammenwirkende Dichtungsanordnung (73) vorgesehen ist, dass die den sich durch den Durchgang (131) des Führungsbereiches (130) erstreckenden Pulverförderrohrbereich umgebende Ringkammer (132) zumindest teilweise derart abgedichtet ist, dass zumindest ein Ansaugkanal (133) zwischen der Mantelfläche des Pulverförderrohres (70) und dem Führungsbereich (130) frei bleibt, über den Luft in die Ringkammer (132) strömen kann.

4. Vorrichtung (110) nach einem der Ansprüche 1 bis 3,
wobei eine Abstreiferanordnung vorgesehen ist zum mechanischen Abstreifen von an der äußeren Mantelfläche des Pulverförderrohres (70) haftenden Pulverresten,
wobei die Abstreiferanordnung derart mit dem sich zumindest teilweise durch den Durchgang (131) des Führungsbereiches (130) erstreckenden Pulverförderrohrbereich zusammenwirkt, dass bei einer Verschiebung des Pulverförderrohres (70) relativ zu der Pulverförderrohrhalterung (72) in Längsrichtung (L) des Pulverförderrohres (70) an der äußeren Mantelfläche des Pulverförderrohres (70) anhaftende Pulverreste zumindest teilweise mechanisch von der äußeren Mantelfläche des Pulverförderrohres (70) abgestreift werden.

5. Vorrichtung (110) nach einem der Ansprüche 1 bis 4,
wobei eine zuschaltbare Restpulverabsaugung (140) vorgesehen ist zum bedarfsweisen Absaugen von an der äußeren Mantelfläche des Pulverförderrohres (70) haftenden Pulverresten,
wobei die Restpulverabsaugung (140) ein mit einer Vakuumquelle oder dergleichen Absaugeinrichtung verbundenes oder verbindbares Absaugrohr (141) aufweist zum Absaugen von an der äußeren Mantelfläche des Pulverförderrohres (70) haftenden Pulverresten.

6. Vorrichtung (110) nach Anspruch 5,
wobei die Pulverförderrohrhalterung (72) einen mit dem Führungsbereich (130) verbundenen Armbereich (72') aufweist, über den der Führungsbereich (130) mit einer Basis der Pulverförderrohrhalterung (72) verbunden ist.

7. Vorrichtung (110) nach Anspruch 5 und 6,
wobei das Absaugrohr (141) der Restpulverabsaugung (140) zumindest bereichsweise in den Armbereich (72') der Pulverförderrohrhalterung (72) integriert oder aufgenommen ist.

8. Vorrichtung (110) nach einem der Ansprüche 5 bis 7 in Verbindung mit Anspruch 2 oder 3, wobei ein ansaugseitiger Endbereich des Absaugrohres (141) der Restpulverabsaugung (140) mit der den Pulverförderrohrbereich zumindest teilweise umgebenden Ringkammer (132) in Fluidverbindung steht oder in Fluidverbindung bringbar ist.

9. Vorrichtung (110) nach Anspruch 1,
wobei die Schieber-/Verschlussanordnung (150) mit der Pulverförderrohrhalterung (72) verbunden ist.

10. Vorrichtung (110) nach Anspruch 9,
wobei die Schieber-/Verschlussanordnung (150) eine Führung (152) aufweist zum Führen der Bewegung des Schieber-/Verschlusselements (151) von seiner ersten Position in seine zweite Position und umgekehrt.

11. Vorrichtung (110) nach einem der Ansprüche 1 bis 10,
wobei die Druckluftleitung (142) mit einer Druckluftquelle verbunden oder verbindbar ist zum Einleiten von Druckluft in gepulster Weise in das ansaugseitige Ende des Pulverförderrohres (70) im Reinigungsbetrieb der Vorrichtung (110).

12. Pulverbeschichtungsanlage (1) zum Sprühbeschichten von Gegenständen (2) mit Beschichtungspulver, wobei die Pulverbeschichtungsanlage (1) mindestens eine Pulverfördervorrichtung (110) gemäß einem der Ansprüche 1 bis 11 aufweist zum Fördern von Beschichtungspulver aus einem Pulverbehälter (12, 24) zu mindestens einer Sprühvorrichtung (40).

13. Pulverbeschichtungsanlage (1) nach Anspruch 12,
wobei der Pulverbehälter (12, 24) ein Lieferantenbehälter, insbesondere ein in einem Sackaufnahmetrichter (74) aufgenommener Pulversack ist.

14. Verfahren zum Reinigen einer Pulverfördervorrichtung (110) gemäß einem der Ansprüche 1 bis 11, wobei das Verfahren die folgenden Verfahrensschritte aufweist:
- das Pulverförderrohr (70) der Pulverfördervorrichtung (110) wird relativ zu der Pulverförderrohrhalterung (72) in Längsrichtung (L) des Pulverförderrohres (70) derart verschoben, dass an der äußeren Mantelfläche des Pulverförderrohres (70) ggf. anhaftende Pulverreste zumindest teilweise von einer an der Pulverförderrohrhalterung (72) vorgesehenen Abstreiferanordnung mechanisch abgestreift werden; und
- der Pulvereinlass (71) des Pulverförderrohres (70) wird verschlossen und eine Druckluftleitung (142) an das Pulverförderrohr (70) angeschlossen, wobei über die Druckluftleitung (142) in das Innere des Pulverförderrohres (70) Reinigungsdruckluft vorzugsweise in gepulster Weise zugeführt wird,
**dadurch gekennzeichnet, dass** der Pulvereinlass (71) mit einem Schieberelement (151) verschlossen wird, welches mit der Druckluftleitung (!42) verbunden ist.

15. Verfahren nach Anspruch 14,
wobei mit Hilfe einer Restpulverabsaugung (140) ggf. an der äußeren Mantelfläche des Pulverförderrohres (70) anhaftende Pulverreste beim Verschieben des Pulverförderrohres (70) relativ zu der Pulverförderrohrhalterung (72) abgesaugt werden.

## Claims

1. A device (110) for conveying coating powder from a powder container (12, 24), wherein the device (110) comprises the following:
- a powder conveying tube (70) having a powder inlet (71) through which coating powder can be fed from a powder container (12, 24) to the powder conveying tube (70), in particular by means of suction; and
- a powder conveying tube retainer (72) for holding the powder conveying tube (70);
wherein the powder conveying tube (70) is selectively displaceable relative to the powder conveying tube retainer (72) in the longitudinal direction (L) of the powder conveying tube (70), and wherein for the purpose of cleaning the powder conveying tube (70), the powder inlet (71) of the powder conveying pipe (70) can be closed and a compressed air line (142) can be connected to the powder conveying tube (70),
wherein the powder conveying tube retainer (72) comprises a guide region (130) having a connecting passage (131) arranged coaxially and concentrically to the longitudinal axis of the powder conveying tube (70) through which at least part of the powder conveying tube (70) extends, **characterized in that**
a slider/closure assembly (150) having a slider/closure element (151) is provided which is displaceable relative to the powder conveying tube retainer (72) and relative to the powder conveying tube (70) extending at least partially through the connecting passage (131) of the powder conveying tube retainer (72) from a first position, in which at least part of the slider/closure element (151) covers a passage opening (133) of the connecting passage (131) formed in the guide region (130), into a second position in which the slider/closure element (151) exposes the passage opening (133) of the connecting passage (131) formed in the guide region (130) such that the powder conveying tube (70) can be displaced relative to the guide region (130) through the connecting passage (131) of said guide region (130) in the longitudinal direction (L) of the powder conveying tube (70), and
a compressed air outlet (143) of the compressed air line (142) is connected to the slider/closure element (151) such that the compressed air outlet (143) discharges into the passage opening (133) of the connecting passage (131) formed in the guide region (130) in the first position of the slider/closure element (151).

2. The device (110) according to claim 1,
wherein the connecting passage (131) of the guide region (130) is configured such that the connecting passage (131) of the guide region (130) forms an annular chamber (132) with a section of the powder conveying tube (70) extending through said connecting passage (131) within the guide region (130) which at least partly encloses the section of the powder conveying tube extending through said connecting passage (131) of the guide region (130).

3. The device (110) according to claim 2,
wherein a sealing arrangement (73) is provided which interacts with the powder conveying tube (70) at least partially extending through the connecting passage (131) of the guide region (130) so as to at least partially seal the annular chamber (132) enclosing the section of the powder conveying tube extending through the connecting passage (131) of the guide region (130) such that at least one suction channel (133) remains open between the surface area of the powder conveying tube (70) and the guide region (130) via which air can flow into the annular chamber (132).

4. The device (110) according to any one of claims 1 to 3,
wherein a wiper assembly is provided for mechanically wiping off powder residue adhering to the outer surface area of the powder conveying tube (70), wherein the wiper assembly interacts with the section of the powder conveying tube extending at least partially through the connecting passage (131) of the guide region (130) such that at least a portion of the powder residue adhering to the outer surface area of the powder conveying tube (70) is mechanically wiped off the outer surface area of the powder conveying tube (70) upon a displacement of the powder conveying tube (70) relative to the powder conveying tube retainer (72) in the longitudinal direction (L) of the powder conveying tube (70).

5. The device (110) according to any one of claims 1 to 4,
wherein an attachable residual powder extractor (140) is provided for suctioning off powder residue adhering to the outer surface area of the powder conveying tube (70) as needed,
wherein the residual powder extractor (140) comprises a suction tube (141) connected or connectable to a vacuum source or other such suction mechanism for suctioning off powder residue adhering to the outer surface area of the powder conveying tube (70).

6. The device (110) according to claim 5,
wherein the powder conveying tube retainer (72) comprises an arm section (72') connected to the guide region (130) by means of which the guide region (130) is connected to a base of the powder conveying tube retainer (72).

7. The device (110) according to claim 5 and 6,
wherein the suction tube (141) of the residual powder extractor (140) is at least partially integrated or incorporated into the arm section (72') of the powder conveying tube retainer (72).

8. The device (110) according to any one of claims 5 to 7 in conjunction with claim 2 or 3, wherein an intake-side end section of the suction tube (141) of the residual powder extractor (140) is in or can be brought into fluid connection with the annular chamber (132) at least partially enclosing the powder conveying tube section.

9. The device (110) according to claim 1,
wherein the slider/closure assembly (150) is connected to the powder conveying tube retainer (72).

10. The device (110) according to claim 9,
wherein the slider/closure assembly (150) comprises a guide (152) for guiding the movement of the slider/closure element (151) from its first position into its second position and vice versa.

11. The device (110) according to any one of claims 1 to 10,
wherein the compressed air line (142) is connected or connectable to a compressed air source for introducing compressed air in pulsed manner into the intake-side end of the powder conveying tube (70) during the cleaning mode of the device (110).

12. A powder coating system (1) for spray coating objects (2) with coating powder, wherein the powder coating system (1) comprises at least one powder conveying device (110) in accordance with one of claims 1 to 11 for conveying coating powder from a powder container (12, 24) to at least one spraying device (40).

13. The powder coating system (1) according to claim 12,
wherein the powder container (12, 24) is a supplier container, particularly a powder bag accommodated in a bag receiving hopper (74).

14. A method for cleaning a powder conveying device (110) in accordance with one of claims 1 to 11, wherein the method comprises the following steps:
- the powder conveying tube (70) of the powder conveying device (110) being displaced relative to the powder conveying tube retainer (72) in the longitudinal direction (L) of said powder conveying tube (70) such that a wiper assembly provided on the powder conveying tube retainer (72) can mechanically wipe off at least a portion of any powder residue which might be adhering to the outer surface area of the powder conveying tube (70); and
- the powder inlet (71) of the powder conveying tube (70) being closed and a compressed air line (142) being connected to the powder conveying tube (70), wherein compressed cleaning air is fed through the compressed air line (142) into the interior of the powder conveying tube (70) in preferably pulsed manner,
**characterized in that** the powder inlet (71) is closed by a slider element (151) connected to the compressed air line (142).

15. The method according to claim 14,
wherein a residual powder extractor (140) is used to suction off any powder residue which may be adhering to the outer surface area of the powder conveying tube (70) upon the displacement of the powder conveying tube (70) relative to the powder conveying tube retainer (72).

## Revendications

1. Dispositif (100) pour transporter une poudre de revêtement à partir d'un récipient à poudre (12, 24), le dispositif (110) comprenant :
- un tube transporteur de poudre (70) pourvu d'une entrée de poudre (71) par laquelle une poudre de revêtement peut être amenée par aspiration depuis un récipient à poudre (12, 24) jusqu'au tube transporteur de poudre (70) ; et
- une monture de tube transporteur de poudre (72) pour maintenir le tube transporteur de poudre (70) ;
le tube transporteur de poudre (70) étant mobile en translation au choix par rapport à la monture de tube transporteur de poudre (72) en direction longitudinale (L) du tube transporteur de poudre (70), et en vue d'un nettoyage du tube transporteur de poudre (70), l'entrée de poudre (71) du tube transporteur de poudre (70) est susceptible d'être refermée, et une conduite à air comprimé (142) est susceptible d'être raccordée au tube transporteur de poudre (70), la monture de tube transporteur de poudre (72) présentant une zone de guidage (130) avec un passage (131) ménagé coaxialement et concentriquement par rapport à l'axe longitudinal du tube transporteur de poudre (70), passage qui est au moins localement traversé par le tube transporteur de poudre (70), **caractérisé en ce que**
il est prévu un ensemble coulisseau/obturateur (150) comportant un élément coulisseau/obturateur (151) qui est mobile en translation par rapport à la monture de tube transporteur de poudre (72) et par rapport au tube transporteur de poudre (70) qui s'étend au moins localement à travers le passage (131) de la monture de tube transporteur de poudre (72), depuis une première position dans laquelle l'élément coulisseau/obturateur (151) recouvre au moins partiellement une ouverture de passage (133) du passage (131) réalisé dans la zone de guidage (130), jusque dans une seconde position dans laquelle l'élément coulisseau/obturateur (151) libère l'ouverture de passage (133) du passage (131) réalisé dans la zone de guidage (130), de telle sorte que le tube transporteur de poudre (70) est mobile en translation par rapport à la zone de guidage (130) en direction longitudinale (L) du tube transporteur de poudre (70) à travers le passage (131) de la zone de guidage (130), et **en ce que**
une sortie d'air comprimé (143) de la conduite à air comprimé (142) est reliée à l'élément coulisseau/obturateur (151) de telle sorte que dans la première position de l'élément coulisseau/obturateur (151) la sortie d'air comprimé (144) débouche dans l'ouverture de passage (133) du passage (131) réalisé dans la zone de guidage (130).

2. Dispositif (110) selon la revendication 1,
dans lequel le passage (131) de la zone de guidage (130) est réalisé de telle sorte que le passage (131) de la zone de guidage (130) forme une chambre annulaire (132) à l'intérieur de la zone de guidage (130) avec une zone du tube transporteur de poudre (70) qui s'étend à travers le passage (131), chambre qui entoure au moins partiellement la zone de tube transporteur de poudre qui s'étend à travers le passage (131) de la zone de guidage (130).

3. Dispositif selon la revendication 2,
dans lequel est prévu un ensemble d'étanchéité (73) qui coopère avec le tube transporteur de poudre (70) traversant au moins partiellement le passage (131) de la zone de guidage (130), de telle sorte que la chambre annulaire (132) entourant la zone de tube transporteur de poudre traversant le passage (131) de la zone de guidage (130) est au moins partiellement étanchée de telle sorte qu'un canal d'aspiration (133) entre la surface enveloppe du tube transporteur de poudre (70) et la zone de guidage (130) reste libre, canal par lequel l'air peut s'écouler jusque dans la chambre annulaire (132).

4. Dispositif (110) selon l'une des revendications 1 à 3,
dans lequel
il est prévu un ensemble racleur pour le raclage mécanique de restes de poudre adhérant sur la surface enveloppe extérieure du tube transporteur de poudre (70),
l'ensemble racleur coopère avec la zone de tube transporteur de poudre qui s'étend au moins partiellement à travers le passage (131) de la zone de guidage (130), de telle sorte que lors d'une translation du tube transporteur de poudre (70) par rapport à la monture de tube transporteur de poudre (72) en direction longitudinale (L) du tube transporteur de poudre (70), des restes de poudre adhérant sur la surface enveloppe extérieure du tube transporteur de poudre (70) sont raclés au moins partiellement mécaniquement depuis la surface enveloppe extérieure du tube transporteur de poudre (70).

5. Dispositif (110) selon l'une des revendications 1 à 4,
dans lequel est prévu un moyen d'aspiration de poudre résiduelle (140) susceptible d'être mis en circuit et destiné à aspirer en fonction des besoins des restes de poudre adhérant sur la surface enveloppe extérieure du tube transporteur de poudre (70),
le moyen d'aspiration de poudre résiduelle (140) comprend un tube aspirateur (141) relié ou susceptible d'être relié à une source de vide ou à un moyen aspirateur similaire, destiné à aspirer des restes de poudre adhérant sur la surface enveloppe extérieure du tube transporteur de poudre (70).

6. Dispositif (110) selon la revendication 5,
dans lequel la monture de tube transporteur de poudre (72) comprend une zone de bras (72') qui est reliée à la zone de guidage (130) et par laquelle la zone de guidage (130) est reliée à une base de la monture de tube transporteur de poudre (72).

7. Dispositif (110) selon la revendication 5 et 6,
dans lequel le tube aspirateur (141) du moyen d'aspiration de poudre résiduelle (140) est intégré ou logé au moins partiellement dans la zone de bras (72') de la monture de tube transporteur de poudre (72).

8. Dispositif (110) selon l'une des revendications 5 à 7 en combinaison avec la revendication 2 ou 3, dans lequel une zone d'extrémité côté aspiration du tube aspirateur (141) du moyen d'aspiration de poudre résiduelle (140) est en liaison fluidique ou susceptible d'être amenée en liaison fluidique avec la chambre annulaire (132) entourant au moins partiellement la zone de tube transporteur de poudre.

9. Dispositif (110) selon la revendication 1,
dans lequel l'ensemble coulisseau/obturateur (150) est relié à la monture de tube transporteur de poudre (72).

10. Dispositif (110) selon la revendication 9,
dans lequel l'ensemble coulisseau/obturateur (150) comprend un guidage (152) pour guider le déplacement de l'élément coulisseau/obturateur (151) depuis sa première position jusque dans sa seconde position, et inversement.

11. Dispositif (110) selon l'une des revendications 1 à 10,
dans lequel la conduite à air comprimé (142) est reliée ou susceptible d'être reliée à une source d'air comprimé en vue d'injecter de l'air comprimé de façon pulsée dans l'extrémité côté aspiration du tube transporteur de poudre (70), en fonctionnement de nettoyage du dispositif (110).

12. Installation de revêtement de poudre (1) pour le revêtement par pulvérisation d'objets (2) par une poudre de revêtement, l'installation de revêtement de poudre (1) comprenant au moins un dispositif transporteur de poudre (110) selon l'une des revendications 1 à 11 pour transporteur une poudre de revêtement depuis un récipient à poudre (12, 24) jusqu'à au moins un dispositif de pulvérisation (40).

13. Installation de revêtement de poudre (1) selon la revendication 12,
dans laquelle le récipient à poudre (12, 24) est un récipient de fournisseur, en particulier un sac de poudre reçu dans un entonnoir récepteur de sac (74).

14. Procédée de nettoyage d'un dispositif transporteur de poudre (110) selon l'une des revendications 1 à 11, le procédé comprenant les étapes suivantes :
- on déplace le tube transporteur de poudre (70) du dispositif transporteur de poudre (110) par rapport à la monture de tube transporteur de poudre (72) en direction longitudinale (L) du tube transporteur de poudre (70), de telle sorte que des restes de poudre adhérant le cas échéant sur la surface enveloppe extérieure du tube transporteur de poudre (70) sont raclées au moins partiellement mécaniquement par un ensemble racleur prévu sur la monture de tube transporteur de poudre (72) ; et
- on referme l'entrée de poudre (71) du tube transporteur de poudre (70) et on raccorde une conduite à air comprimé (142) au tube transporteur de poudre (70), de l'air comprimé de nettoyage étant amené de préférence de façon pulsée dans l'intérieur du tube transporteur de poudre (70) via la conduite à air comprimé (142),
**caractérisé en ce que** l'on referme l'entrée de poudre (71) par un élément formant coulisseau (151) qui est relié à la conduite à air comprimé (142).

15. Procédé selon la revendication 14,
dans lequel, à l'aide d'un moyen d'aspiration de poudre résiduelle (140), on aspire des restes de poudre adhérant le cas échant sur la surface enveloppe extérieure du tube transporteur de poudre (70) lors du déplacement du tube transporteur de poudre (70) par rapport à la monture de tube transporteur de poudre (72).
